# FASCICULE DE BREVET EUROPEEN

(11) **EP 0 541 452 B1**
(45) Date de publication et mention de la délivrance du brevet: **29.01.1997**
(21) Numéro de dépôt: 92403012.5
(22) Date de dépôt: 06.11.1992
(51) Int. Cl.: B60R 25/02

(54) **Dispositif antivol pour véhicules automobiles**
Anti-Diebstahlvorrichtung für Kraftfahrzeuge
Antitheft device for motor vehicles

(30) Priorité: 08.11.1991 FR 9113826
(43) Date de publication de la demande: 12.05.1993
(73) Titulaire: VALEO SECURITE HABITACLE, 78290 Croissy-Sur-Seine (FR)
(72) Inventeur: Jawdoszyn, Claude, F-95110 Sannois (FR)
(74) Mandataire: Lemaire, Marc

(56) Documents cités:
- WO-A-83/03580
- FR-A- 681 042
- FR-A- 2 624 811
- US-A- 1 631 436

## Description

La présente invention concerne d'une manière générale un dispositif antivol pour véhicules automobiles.

L'invention concerne plus particulièrement un dispositif antivol pour véhicule automobile, plus particulièrement un dispositif antivol motorisé, comprenant une bague de verrouillage solidaire d'un arbre et munie de dents, deux pênes comportant chacun une pointe et un bras, lesdits pênes pouvant pivoter autour de tourillons montés avec jeu dans un porte pênes, des moyens de pivotement de chaque pêne de manière à passer d'une position de verrouillage dans laquelle la pointe coopère avec les dents de la bague de verrouillage à une position de déverrouillage dans laquelle la pointe échappe auxdites dents, les moyens de pivotement étant constitués de deux cames en vis-à-vis coopérant chacune avec le bras du pêne correspondant.

Un tel dispositif anti-vol est décrit et représenté dans le document FR-A-2.624.811.

Les cames du dispositif décrit dans ce document sont portées par une tirette coulissante à l'intérieur de laquelle est aménagée une fenêtre dans laquelle une portion étroite et une portion large se succèdent longitudinalement et sont reliées par des plans inclinés en vis-à-vis.

Ce dispositif présente l'inconvénient nécessite la réalisation d'un guidage en coulissement de très bonne qualité pour éviter tout risque de coincements qui seraient notamment susceptibles d'empêcher le verrouillage du dispositif.

Par ailleurs, le document US-A-1.631.436 décrit un dispositif dans lequel un pêne de verrouillage est commandé par une came rotative dont le fonctionnement est plus fiable que celui d'une came commandée en coulissement.

Toutefois, l'application du dispositif décrit et représenté dans le document US-A-1.631.436 au mécanisme de verrouillage décrit et représenté dans le document FR-2.624.811 conduirait au montage de deux cames circulaires opposées commandant chacune un des deux bras de levier selon deux directions alignées mais opposées.

Par ailleurs, il apparait de plus en plus intéressant d'installer le dispositif antivol non plus à proximité du tableau de bord, mais à l'intérieur du compartiment moteur, sa fonction restant le blocage en rotation d'un arbre, que celui-ci constitue la colonne de direction ou la sortie de la boîte de vitesse par exemple.

Dans ces conditions, le dispositif antivol peut avantageusement faire partie d'un processus de démarrage du véhicule géré par exemple par un microprocesseur.

Il faut alors pouvoir commander le dispositif antivol à distance et actionner de manière sûre les organes de blocage de l'arbre sur lequel il est monté.

Selon d'autres caractéristiques de l'invention :
- une came s'étend sur la face interne d'un flanc d'extrémité qui porte la denture du pignon récepteur ;
- le pignon récepteur comprend un fût cylindrique à l'extrémité duquel est ménagée une mortaise formant avec ledit fût des rainures destinées à coopérer par emboîtement avec un tenon ménagé à l'extrémité d'un fût cylindrique d'un flanc d'extrémité formant porte-cames, le tenon formant avec ledit fût des rainures ;
- le dispositif comprend un boîtier contenant l'ensemble des constituants du dispositif, ledit boîtier étant rendu solidaire du châssis du véhicule par une bride ;
- un train de pignons intermédiaire est interposé entre le pignon récepteur et le pignon moteur solidaire en rotation du moteur électrique ;
- chaque pêne comporte un corps cylindrique coopérant avec un berceau ménagé dans une butée de pêne solidaire de la bride ;
- chaque pêne est rappelé en position de verrouillage par un ressort de torsion.

La présente invention sera mieux comprise à l'aide de la description qui va suivre en regard des dessins annexés donnés à titre d'exemple non limitatif dans lesquels :

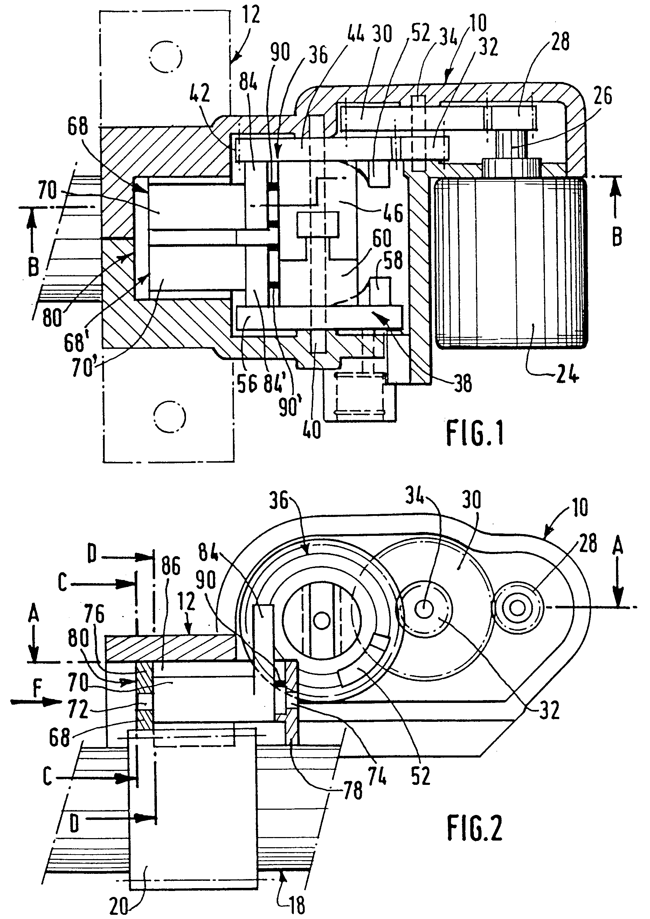

- la figure 1 est une vue de dessus en coupe partielle suivant la ligne brisée A-A de la figure 2 d'un dispositif suivant l'invention ;
- la figure 2 est une coupe partielle suivant la ligne brisée B-B de la figure 1 ;
- la figure 3 est une vue partielle suivant la flèche F de la figure 2 du dispositif en position de verrouillage ;
- la figure 4 est une vue identique à la figure 3 suivant la ligne C-C de la figure 2, le dispositif étant en position de déverrouillage ;
- la figure 5 est une vue identique à la figure 4 suivant la ligne D-D de la figure 2 ;
- la figure 6 est une vue en perspective à échelle agrandie d'un moyen d'assemblage entre un pignon récepteur et un porte-cames du dispositif selon l'invention.

L'ensemble des constituants du dispositif antivol est contenu dans un boîtier ou carter 10 réalisé par exemple par moulage d'un alliage d'aluminium.

Le boîtier 10 est rendu solidaire du véhicule par une bride 12 comportant latéralement deux pattes de fixation 14 et présentant dans sa partie centrale 16 une forme de U inversé de manière à chevaucher un arbre 18 que le dispositif doit pouvoir bloquer en rotation.

A cet effet, l'arbre 18 comporte une bague de verrouillage 20 rendue solidaire de l'arbre 18 par exemple par clavetage, ladite bague de verrouillage 20 étant munie à sa périphérie de dents 22 régulièrement espacées et dont les flancs sont sensiblement radiaux.

De manière à pouvoir être commandé à distance, le dispositif comprend un moteur électrique 24 fixé sur le carter 10 par tous moyens appropriés.

L'arbre de sortie 26 du moteur électrique 24 est muni d'un pignon moteur 28 engrènant avec un train de pignons intermédiaires composé dans l'exemple représenté de deux pignons 30,32 tourillonnant autour d'un axe 34 solidaire du carter 10.

Le train de pignons 30,32 engrène par le pignon 32 avec un pignon récepteur 36 dont la denture 42 se situe à la périphérie d'un flanc d'extrémité 44. Ledit flanc 44 se prolonge par un fût cylindrique 46.

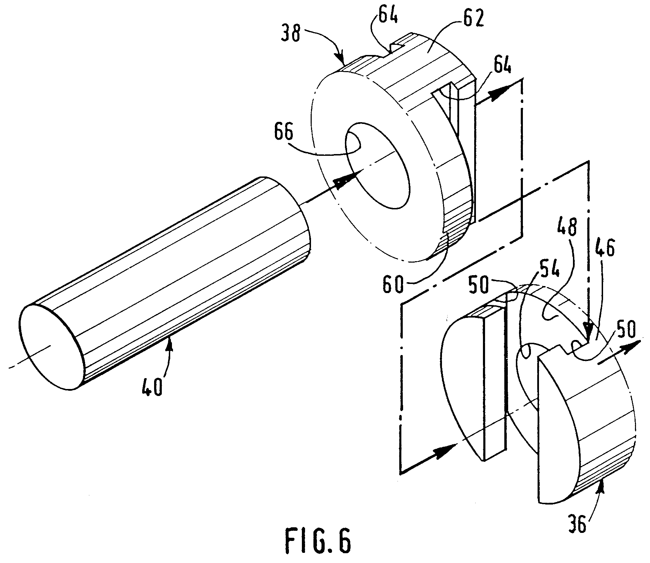

Ainsi qu'il est représenté plus en détail figure 6, l'extrémité du fût cylindrique 46 opposé au flanc 44 comporte une mortaise 48 ménageant avec ledit fût 46 des rainures 50.

Suivant l'invention, le pignon récepteur 36 porte sur la face intérieure du flanc 44 une came 52 qui s'étend circonférentiellement et se développe axialement et dont le rôle sera explicité plus avant.

Le pignon récepteur 36 comporte en son centre un trou cylindrique 54 destiné à recevoir un arbre de came 40 solidaire du carter 10 et autour duquel il peut tourillonner.

Sur ce même arbre de came 40 est monté tourillonnant un porte-came 38 dont la forme est globalement identique au pignon récepteur 36. A cet effet, il comprend un flanc d'extrémité 56 sur la face intérieure duquel est ménagée une came 58 identique à la came 52, c'est-à-dire que ladite came 58 s'étend circonférentiellement et se développe axialement sur le flanc 56. Le flanc d'extrémité 56 se prolonge par un fût cylindrique 60 à l'extrémité duquel est ménagé un tenon 62 (voir figure 6) formant avec ledit fût 60 des rainures 64.

Le porte-came 38 comprend également en son centre un alésage 66 destiné à recevoir l'arbre de came 40.

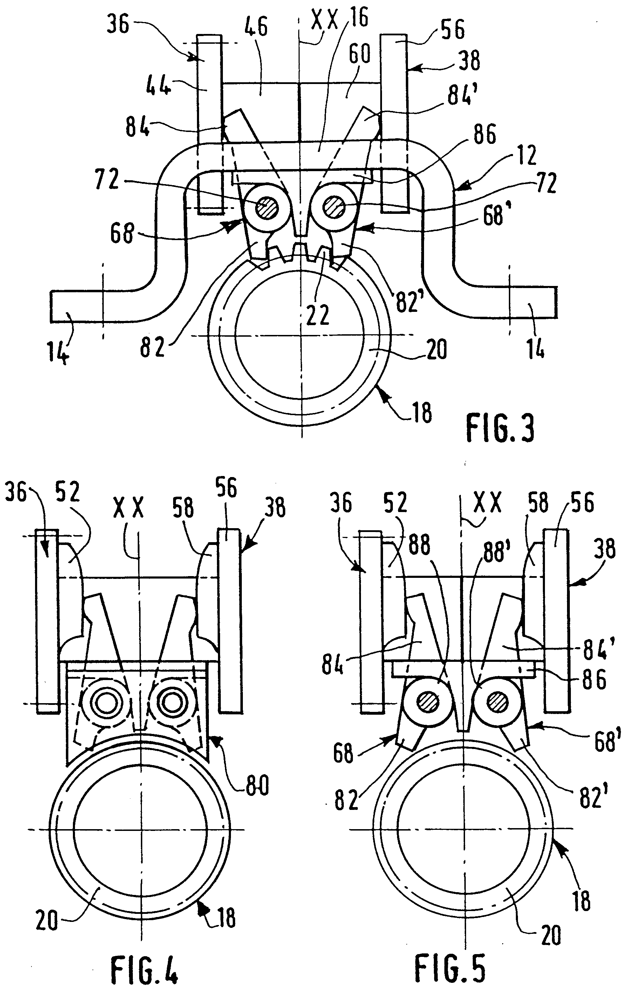

Ainsi qu'il est illustré sur la figure 6, la mortaise 48 et les rainures 50 du pignon récepteur 36 sont de formes complémentaires au tenon 62 et aux rainures 64 du porte-came 38 de manière à réaliser, entre le pignon récepteur 36 et le porte-came 38, un assemblage par emboîtement qui les rend solidaires en rotation. De plus cette conception permet au pignon récepteur 36 et au porte-came 38 d'avoir une indexation angulaire précise de façon à ce que les cames 52 et 58 soient en vis-à-vis comme illustré en particulier sur les figures 4 et 5.

Le dispositif antivol comprend par ailleurs un organe de verrouillage de l'arbre 18 constitué de deux pênes ou leviers de verrouillage 68 et 68′ montés symétriquement par rapport à l'axe X-X. Les leviers 68,68′ comportent un corps cylindrique 70,70′ aux extrémités desquels sont ménagés des tourillons 72,72′ ; 74,74′ coopérant respectivement avec des paliers 76,78 d'un porte-pênes 80 de manière à guider en rotation les leviers 68,68′.

Du corps cylindrique 70,70′ des leviers 68,68′ sont ménagées des pointes 82,82′ destinées à coopérer avec les dents 22 de la bague de verrouillage 20.

Les leviers 68,68′ comprennent également un bras 84,84′ dont l'extrémité opposée aux pointes 82,82′ vient en appui sur les faces intérieures des flancs 44,56 du pignon récepteur 36 et du porte-came 38.

Une butée de pêne 86 est fixée à la bride 12 et comporte deux berceaux 88,88′ dans lesquels viennent se loger les corps cylindriques 70,70′ des leviers 68,68′ (figure 5).

On notera que les tourillons 72,72′ ; 74,74′ sont montés avec jeu dans les paliers 76,78 du porte-pênes 80 de manière à ce que les efforts appliqués aux leviers 68,68′ soient encaissés par la butée de pêne 86 et non par lesdits tourillons.

Le fonctionnement d'un tel dispositif est le suivant

En position de verrouillage, représentée à la figure 3, les bras 84,84′ des leviers 68,68′ sont en appui sur les faces internes des flancs 44 et 56 du pignon récepteur 36 et du porte-came 38 ; les pointes 82,82′ viennent pénétrer dans les dents 22 de la bague de verrouillage 20, bloquant ainsi en rotation l'arbre 18.

On notera qu'en position de verrouillage lorsqu'il y a tentative d'effraction, les efforts s'exerçant sur les leviers 68,68′ sont encaissés par la butée de pêne 86 et la bride 12 de manière à éviter toute détérioration des éléments du dispositif.

Lorsque l'on veut procéder au déverrouillage de l'arbre 18 on commande la mise en rotation du moteur électrique 24 dont le mouvement est transmis via le pignon moteur 28 et le train de pignons intermédiaires 30,32 au pignon récepteur 36 et donc au porte-came 38.

Cette rotation du moteur 24 continue jusqu'à ce que les extrémités 84,84′ des leviers 68,68′ viennent coopérer avec les cames 52 et 58 obligeant ainsi les leviers 68,68′ à basculer de manière à ce que leurs pointes 82,82′ échappent aux dents 22 de la bague de verrouillage 20 et occupent ainsi une position de déverrouillage comme illustrée sur les figures 4 et 5.

Des ressorts de torsion 90,90′ rappellent les leviers 68,68′ dans la position de verrouillage de la figure 3.

## Revendications

1. Dispositif antivol pour véhicules automobiles, plus particulièrement dispositif antivol motorisé, comprenant une bague de verrouillage (20) solidaire d'un arbre (18) et munie de dents (22), deux pênes (68, 68') comportant chacun une pointe (82, 82') et un bras (84, 84'), lesdits pênes (68, 68') pouvant pivoter autour de tourillons (72, 72', 74, 74') montés avec jeu dans un porte-pênes (80), des moyens de pivotement de chaque pêne (68, 68') de manière à passer d'une position de verrouillage dans laquelle la pointe (82, 82') coopère avec les dents (22) de la bague de verrouillage (20) à une position de déverrouillage dans laquelle la pointe (82, 82') échappe auxdites dents (22), les moyens de pivotement étant constitués de deux cames (52, 58) en vis-à-vis coopérant chacune avec le bras (84, 84') du pêne (68, 68') correspondant, caractérisé en ce que chaque came s'étend circonférentiellement en se développant axialement sur les faces internes en vis-à-vis de deux flancs d'extrémité (44, 56) d'un ensemble porte-cames, et en ce que l'ensemble porte-cames est commandé en rotation par un moteur électrique (24) par l'intermédiaire d'un pignon moteur (28) solidaire en rotation du moteur électrique (24) et d'un pignon récepteur (36).

2. Dispositif selon la revendication 1, caractérisé en ce qu'une came (52) s'étend sur la face interne d'un flanc d'extrémité (44) qui porte la denture (42) du pignon récepteur (36).

3. Dispositif selon la revendication 2, caractérisé en ce que le pignon récepteur (36) comprend un fût cylindrique (46) à l'extrémité duquel est ménagée une mortaise (48) formant avec ledit fût (46) des rainures (50) destinées à coopérer par emboîtement avec un tenon (62) ménagé à l'extrémité d'un fût cylindrique (60) d'un flanc d'extrémité (56) formant porte-cames (38), le tenon (62) formant avec ledit fût (60) des rainures (64).

4. Dispositif selon l'une des revendications précédentes, caractérisé en ce qu'il comprend un boîtier (10) contenant l'ensemble des constituants du dispositif, ledit boîtier (10) étant rendu solidaire du chassis du véhicule par une bride (12).

5. Dispositif selon l'une des revendications précédentes, caractérisé en ce qu'un train de pignons intermédiaire (30, 32) est interposé entre le pignon récepteur (36) et le pignon moteur (28) solidaire en rotation du moteur électrique (24).

6. Dispositif selon l'une des revendications précédentes, caractérisé en ce que chaque pêne (68, 68') comporte un corps cylindrique (70, 70') coopérant avec un berceau (80, 80') ménagé dans une butée de pêne (86) solidaire de la bride (12).

7. Dispositif selon l'une des revendications précédentes, caractérisé en ce que chaque pêne (68, 68') est rappelé en position de verrouillage par un ressort de torsion (90, 90').

## Claims

1. Anti-theft device for motor vehicles, more particularly a motorised anti-theft device, comprising a locking ring (20) fixed to a shaft (18) and provided with teeth (22), two bolts (68, 68') each having a tip (82, 82') and an arm (84, 84'), the said bolts (68, 68') being able to pivot about journals (72, 72', 74, 74') mounted with clearance in a bolt holder (80), pivoting means for each bolt (68, 68') so as to pass from a locking position in which the tip (82, 82') cooperates with the teeth (22) on the locking ring (20) to an unlocking position in which the tip (82, 82') escapes from the said teeth (22), the pivoting means consisting of two cams (52, 58) facing each other, each cooperating with the arm (84, 84') of the corresponding bolt (68, 68'), characterised in that each cam extends circumferentially whilst extending axially over the two facing internal faces of two end flanks (44, 56) of a cam carrier assembly, and in that the cam carrier assembly is controlled in rotation by an electric motor (24) through a driving pinion (28) fixed with respect to rotation to the electrical motor (24) and a receiving pinion (36).

2. Device according to Claim 1, characterised in that a cam (52) extends over the internal face of an end flank (44) which carries the teeth (42) of the receiving pinion (36).

3. Device according to Claim 2, characterised in that the receiving pinion (36) comprises a cylindrical barrel (46) at the end of which is formed a mortice (48) forming, with the said barrel (46), grooves (50) designed to cooperate by nesting with a tenon (62) formed at the end of a cylindrical barrel (60) of an end flank (56) forming a cam carrier (38), the tenon (62) forming, with the said barrel (60), grooves (64).

4. Device according to one of the preceding claims, characterised in that it comprises a casing (10) containing all the components of the device, the said casing (10) being fixed to the chassis of the vehicle by a clamp (12).

5. Device according to one of the preceding claims, characterised in that an intermediate gear train (30, 32) is interposed between the receiving pinion (36) and the driving pinion (28) fixed with respect to rotation to the electric motor (24).

6. Device according to one of the preceding claims, characterised in that each bolt (68, 68') has a cylindrical body (70, 70') cooperating with a cradle (80, 80') formed in a bolt stop (86) fixed to the clamp (12).

7. Device according to one of the preceding claims, characterised in that each bolt (68, 68') is returned to the locking position by a torsion spring (90, 90').

## Patentansprüche

1. Anti-Diebstahlvorrichtung für Kraftfahrzeuge, insbesondere Anti-Diebstahlvorrichtung mit Motorantrieb, bestehend aus einem fest mit einer Welle (18) verbundenen und mit Zähnen (22) versehenen Verriegelungsring (20), zwei Riegeln (68, 68'), die jeweils eine Spitze (82, 82') und einen Arm (84, 84') umfassen, wobei sich die besagten Riegel (68, 68') um Lagerzapfen (72, 72', 74, 74') drehen können, die mit Spiel in einem Riegelhalter (80) eingebaut sind, Schwenkmitteln zu jedem Riegel (68, 68'), um von einer Verriegelungsposition, in der die Spitze (82, 82') mit den Zähnen (22) des Verriegelungsrings (20) zusammenwirkt, zu einer Entriegelungsposition überzugehen, in der sich die Spitze (82, 82') von den besagten Zähnen (22) löst, wobei die Schwenkmittel aus zwei gegenüberliegenden Nocken (52, 58) bestehen, die jeweils mit dem Arm (84, 84') des entsprechenden Riegels (68, 68') zusammenwirken, **dadurch gekennzeichnet**, daß sich jeder Nocken in Umfangsrichtung erstreckt, wobei er sich axial auf den gegenüberliegenden Innenseiten von zwei Abschlußflanken (44, 56) einer Nockenträgereinheit abwickelt, und daß die Nockenträgereinheit durch einen Elektromotor (24) über ein drehfest mit dem Elektromotor (24) verbundenes Antriebsritzel (28) und ein Nehmerritzel (36) drehend angetrieben wird.

2. Vorrichtung nach Anspruch 1 , **dadurch gekennzeichnet,** daß sich ein Nocken (52) auf der Innenseite einer Abschlußflanke (44) erstreckt, welche die Zahnung (42) des Nehmerritzels (36) trägt.

3. Vorrichtung nach Anspruch 2 , **dadurch gekennzeichnet,** daß das Nehmerritzel (36) einen zylindrischen Schaft (46) umfaßt, an dessen Ende ein Zapfenloch (48) vorgesehen ist, das zusammen mit dem besagten Schaft (46) Nuten (50) bildet, um durch Einpassung mit einem Zapfen (62) zusammenzuwirken, der am Ende eines zylindrischen Schafts (60) einer als Nockenträger (38) ausgebildeten Abschlußflanke (36) vorgesehen ist, wobei der Zapfen (62) mit dem besagten Schaft (60) Nuten (64) bildet.

4. Vorrichtung nach einem der vorangehenden Ansprüche, **dadurch gekennzeichnet,** daß sie ein Gehäuse (10) umfaßt, das sämtliche Bestandteile der Vorrichtung enthält, wobei das besagte Gehäuse (10) durch einen Haltebügel (12) fest mit dem Fahrgestell des Fahrzeugs verbunden ist.

5. Vorrichtung nach einem der vorangehenden Ansprüche, **dadurch gekennzeichnet,** daß ein Zwischenritzelsatz (30, 32) zwischen dem Nehmerritzel (36) und dem drehfest mit dem Elektromotor (24) verbundenen Antriebsritzel (28) eingefügt ist.

6. Vorrichtung nach einem der vorangehenden Ansprüche, **dadurch gekennzeichnet,** daß jeder Riegel (68, 68') einen zylindrischen Körper (70, 70') umfaßt, der mit einer Aufnahme (80, 80') zusammenwirkt, die in einem fest mit dem Haltebügel (12) verbundenen Riegelanschlag (86) vorgesehen ist.

7. Vorrichtung nach einem der vorangehenden Ansprüche, **dadurch gekennzeichnet,** daß jeder Riegel (68, 68') durch eine Torsionsfeder (90, 90') in seine Verriegelungsposition zurückgeholt wird.
